# EUROPÄISCHE PATENTSCHRIFT

(11) **EP 3 002 528 B1**
(45) Veröffentlichungstag und Bekanntmachung des Hinweises auf die Patenterteilung: **31.01.2018**
(21) Anmeldenummer: 14187148.3
(22) Anmeldetag: 30.09.2014
(51) Int. Cl.: F24H 7/02, F28D 20/00, F28D 20/02, F28D 1/047

(54) **Wärmespeicher und Verfahren zum Betreiben eines Wärmespeichers**
Heat accumulator and method for operating a heat accumulator
Accumulateur thermique et procédé de fonctionnement d'un accumulateur thermique

(43) Veröffentlichungstag der Anmeldung: 06.04.2016
(73) Patentinhaber: Lumenion GmbH, 10829 Berlin (DE)
(72) Erfinder: Zwinkels, Andrew, 10827 Berlin (DE)
(74) Vertreter: Ridderbusch, Oliver

(56) Entgegenhaltungen:
- CH-A- 192 011
- CN-Y- 2 311 729
- US-A1- 2009 199 998
- US-A1- 2013 340 432

## Beschreibung

Die Erfindung betrifft in einem ersten Gesichtspunkt einen Wärmespeicher nach dem Oberbegriff des Anspruchs 1.

In einem weiteren Aspekt bezieht sich die Erfindung auf ein Verfahren zum Betreiben eines Wärmespeichers nach dem Oberbegriff des Anspruchs 10.

Wärmespeicher umfassen ein Wärmespeichermedium, welches zum Speichern von thermischer Energie erhitzt wird. Gängige Wärmespeichermedien haben eine verhältnismäßig hohe spezifische Wärmekapazität. Dadurch können sie ohne übermäßig hohe Temperaturänderungen relativ große Energiemengen speichern. Aus dem Wärmespeicher abgegebene Wärmeenergie wird für zahlreiche verschiedene Anwendungen genutzt.

Ein gattungsgemäßer Wärmespeicher umfasst ein Gehäuse zum Aufnehmen eines Wärmespeichermediums sowie ein im Gehäuse aufgenommenes Wärmespeichermedium. Außerdem umfasst der Wärmespeicher einen Wärmetauscher, in welchem ein Wärmeträgerfluid transportierbar ist und welcher so angeordnet ist, dass Wärme vom Wärmespeichermedium auf das Wärmeträgerfluid übertragbar ist.

In entsprechender Weise werden bei einem gattungsgemäßen Verfahren zum Betreiben eines Wärmespeichers die Schritte durchgeführt, dass Wärmeenergie von einer Wärmequelle auf ein Wärmespeichermedium übertragen wird, welches in einem Gehäuse des Wärmespeichers aufgenommen ist, und dass Wärmeenergie vom Wärmespeicher auf ein Wärmeträgerfluid übertragen wird, welches durch einen Wärmetauscher transportiert wird.

Für gewisse Anwendungen ist es vorteilhaft, wenn das Wärmespeichermedium auf verhältnismäßig hohe Temperaturen erhitzt werden kann. So wird in DE 10 2012 111 707 A1 beschrieben, Wärmeenergie von beispielsweise einem Heizkraftwerk oder einer Zentralheizungsanlage zu speichern, indem zahlreiche mit Aluminium gefüllte Kapseln als Wärmespeichermedium verwendet werden.

Bei WO 2012/113824 A1 soll Abwärme von einem Zug genutzt werden. Dazu wird ein Wärmespeicher mit Aluminium als Latentwärmespeichermedium vorgeschlagen. Solche bekannten Wärmespeicher sind darauf beschränkt, Abwärme oder Wärmeenergie eines Heizkraftwerks zu nutzen. Andere Energieformen als Wärmeenergie sollen bei den vorgenannten Schriften nicht durch den Wärmespeicher, in Wärmeenergie umgewandelt, gespeichert werden.

US 2009/0199998 A1 zeigt einen Wärmespeicher, nach dem Oberbegriff des Anspruchs 1, mit einem Gehäuse, in welchem elektrische Heizstäbe angeordnet sind, die ein Metall, insbesondere Aluminium, erhitzen. Ein Wärmetauscher führt Wärmeenergie vom Aluminium ab. US 2013/0340432 A1 beschreibt einen Wärmespeicher mit stabförmigen Metallteilen als Wärmespeichermedien. Die Metallteile befinden sich zusammen mit elektrischen Heizelementen in einem Gehäuse. CH 192 011 A beschreibt einen Wärmespeicher, bei dem ein elektrischer Heizer innerhalb von drei Metallzylindern aufgenommen ist, welche als Wärmespeichermedien dienen. Wasser umspült entlang einem Wasserweg direkt den zweiten Zylinder. Auch CN 2 311 729 betrifft einen Wärmespeicher, der elektrische Heizelemente zum Erhitzen eines Wärmespeichermediums umfasst.

Als eine **Aufgabe** der Erfindung kann erachtet werden, einen Wärmespeicher und ein Verfahren zum Betreiben eines Wärmespeichers bereitzustellen, welche

Anwendungsmöglichkeiten eröffnen, die über die bloße Aufnahme und Abgabe von Wärmeenergie hinausgehen.

Diese Aufgabe wird durch den Wärmespeicher mit den Merkmalen des Anspruchs 1 und durch das Verfahren mit den Merkmalen des Anspruchs 10 gelöst.

Vorteilhafte Varianten des erfindungsgemäßen Wärmespeichers und des erfindungsgemäßen Verfahrens sind Gegenstand der abhängigen Ansprüche und werden außerdem in der folgenden Beschreibung erläutert.

Bei dem Wärmespeicher der oben genannten Art ist erfindungsgemäß vorgesehen, dass eine elektrische Heizeinrichtung vorhanden ist, welche zum Umwandeln von elektrischer Energie in Wärmeenergie eingerichtet ist. Die elektrische Heizeinrichtung ist so angeordnet, dass sie im Betrieb das Wärmespeichermedium erhitzt, wobei das von der elektrischen Heizeinrichtung erhitzte Wärmespeichermedium ein Metall ist.

Bei dem Verfahren der oben genannten Art ist erfindungsgemäß vorgesehen, dass als Wärmequelle eine elektrische Heizeinrichtung elektrische Energie in Wärmeenergie umwandelt und dass die von der elektrischen Heizeinrichtung erzeugte Wärmeenergie auf ein Metall als Wärmespeichermedium übertragen wird.

Als eine wesentliche Idee der Erfindung kann erachtet werden, mit einer elektrischen Heizeinrichtung elektrische Energie, möglichst vollständig, in Wärmeenergie umzuwandeln. Diese Wärmeenergie soll sodann möglichst vollständig an ein Metall als Wärmespeichermedium übertragen werden.

Das Speichern von größeren Mengen elektrischer Energie stellt eine große Herausforderung dar. Hierzu sind Speicherkraftwerke bekannt, welche unter Aufwendung elektrischer Energie Wasser aufwärts pumpen und so Energie als potentielle Energie speichern. Der Platzbedarf ist hierbei jedoch sehr hoch. Bekannt sind auch Batterien und ähnliche Mittel, bei denen elektrische Energie umgewandelt und in Form von chemischer Energie gespeichert wird. Unter chemischer Energiespeicherung kann verstanden werden, dass unter Energiezufuhr bestimmte Moleküle in andere Moleküle umgewandelt werden. Zu vertretbaren Kosten lassen sich in dieser Weise aber nur verhältnismäßig geringe Energiemengen speichern. Im Gegensatz hierzu wird mit der elektrischen Heizeinrichtung der Erfindung ermöglicht, dass elektrische Energie in Wärmeenergie umgewandelt und sodann gespeichert werden kann. Zusammen mit der Idee, ein Metall zu erhitzen, wird es ermöglicht, auch große Energiemengen verhältnismäßig kostengünstig zu speichern. Aufgrund der hohen Temperatur kann die gespeicherte Energie auch wieder effizient für Folgeanwendungen genutzt oder in andere Energieformen umgewandelt werden.

Die Erfindung nutzt den Umstand, dass elektrische Energie zeitweise zu äußerst geringen Preisen bezogen werden kann, teilweise sogar zu Negativpreisen. Dies beruht wesentlich auf der verstärkten Nutzung regenerativer Energiequellen wie Sonnen- und Windenergie. Wird übermäßig viel elektrische Energie erzeugt und in ein Stromnetz eingespeist, so fällt der Strompreis rapide. Um die Stromleitungen zu schützen, muss die elektrische Energie aber abgenommen werden. Bei einer zu geringen Zahl an Abnehmern muss die elektrische Energie daher zu negativen Preisen angeboten werden.

Es kann vorgesehen sein, dass der erfindungsgemäße Wärmespeicher insbesondere (ausschließlich) zu Zeiten geladen wird, in denen ein Überschuss an elektrischer Energie in einem externen Stromnetz vorliegt. Dies kann über eine Obergrenze für einen Strompreis definiert sein. Es können Steuerungsmittel vorgesehen sein, welche eine Stromaufnahme durch die elektrische Heizeinrichtung nur dann einschalten, wenn ein Überschuss an elektrischer Energie festgestellt wird. Dies kann insbesondere automatisch erfolgen, etwa durch einen Vergleich eines aktuellen Strompreises mit einem vorgebbaren Maximalpreis.

Die gespeicherte Wärmeenergie kann über das Wärmeträgerfluid steuerbar abgegeben werden. Die Wärmeenergie des Wärmeträgerfluids kann prinzipiell beliebig genutzt werden. Insbesondere können auch Mittel vorhanden sein, mit denen die Wärmeenergie wieder in elektrische Energie gewandelt werden kann. Diese Mittel können beispielsweise gerade dann aktiviert werden, wenn ein aktueller Strompreis einen vorgebbaren Mindestpreis erreicht oder überschreitet.

Unter einer elektrischen Heizeinrichtung kann prinzipiell jedes Mittel verstanden werden, welches elektrische Energie in Wärmeenergie umwandelt. Vorzugsweise ist die elektrische Heizeinrichtung so gestaltet, dass sie mindestens 80%, vorzugsweise über 95% der elektrischen Energie in Wärmeenergie umwandelt. In diesem Fall wird nicht etwa die Abwärme eines anderen Vorgangs genutzt. Vielmehr dient die elektrische Heizeinrichtung gerade dem Zweck, aus elektrischem Strom Wärme zu erzeugen. Dies kann beispielsweise durch Widerstandselemente erfolgen.

Die elektrische Heizeinrichtung kann dazu eingerichtet sein, das Wärmespeichermedium über dessen Schmelzpunkt zu erhitzen. Dadurch kann die Latentwärmeenergie eines Phasenübergangs genutzt werden, womit größere Energiemengen speicherbar sind. Zudem kann durch einen Betrieb in der Nähe einer Phasenübergangstemperatur eine verhältnismäßig konstante Wärmeenergieabgabe auf das Wärmeträgerfluid erfolgen, auch wenn die im Wärmespeicher gespeicherte Energiemenge stärker schwankt. Bei dieser Ausführung muss die elektrische Heizeinrichtung also eine genügend hohe Temperatur erreichen können. Je nach Metall, das als Wärmespeichermedium verwendet wird, kann diese Mindesttemperatur beispielsweise zwischen 600°C und 1100°C liegen.

Besonders bevorzugt wird als Wärmespeichermedium Aluminium verwendet. Dieses hat eine Schmelztemperatur von 660°C. Dies ist zum einen hoch genug, um große Energiemengen speichern zu können und hohe Temperaturen des Wärmeträgerfluids zu ermöglichen, was für die nachfolgende Verwendung des Wärmeträgerfluids einen höheren Wirkungsgrad bedeuten kann. Zum anderen ist die Schmelztemperatur aber auch nicht zu hoch, so dass der Behälter kostengünstig gebildet werden kann. Dieser muss aus einem Material hergestellt sein, dass eine höhere Schmelztemperatur hat als das Wärmespeichermedium. Bei Aluminium als Wärmespeichermedium können daher relativ kostengünstige Metalle den Behälter bilden, etwa Stahl.

Alternativ ist auch Kupfer als Wärmespeichermedium geeignet, bei welchem die Behälterwände ebenfalls mit verhältnismäßig günstigen Metallen hergestellt werden können.

Unter einem Wärmetauscher wird eine Einrichtung verstanden, welche eine oder mehrere Fluidleitungen (beispielsweise Rohrleitungen) aufweist, durch die ein Wärmeträgerfluid geleitet wird, insbesondere gepumpt wird. Die Fluidleitung(en) stehen in thermischem Kontakt mit dem Wärmespeichermedium. Das heißt, dass insbesondere keine Luftisolierung hierzwischen vorhanden ist. Vielmehr sind das Wärmespeichermedium und die Fluidleitung(en) durch ein thermisch gut leitendes Material verbunden, beispielsweise durch Metall. Das Wärmeträgerfluid kann eine prinzipiell beliebige Flüssigkeit oder ein prinzipiell beliebiges Gas sein. Es kann bevorzugt sein, dass eine Phasenübergangstemperatur des Wärmeträgerfluids unterhalb von der des Wärmespeichermediums liegt. Dadurch kann in der Regel mehr Energie auf das Wärmeträgerfluid übertragen werden.

Als Gehäuse können diejenigen Wände verstanden werden, welche das Wärmespeichermedium umgeben, insbesondere einschließen. Das Wärmespeichermedium kann Innenwände des Gehäuses direkt kontaktieren.

Die elektrische Heizeinrichtung ist so angeordnet, dass sie Wärmeenergie in einem oberen Bereich innerhalb des Gehäuses an das Wärmespeichermedium abgibt. In anderen Worten kann die elektrische Heizeinrichtung in einen oberen Bereich des Gehäuses hineinragen oder dort angeordnet sein. Als oberer Bereich kann das obere Drittel oder obere Viertel des Gehäuses verstanden werden. Vorzugsweise ist die elektrische Heizeinrichtung beabstandet zum oberen Rand des Gehäuses angeordnet. Dadurch wird dem Umstand Rechnung getragen, dass das Gehäuse vorzugsweise nicht vollständig mit Wärmespeichermedium gefüllt ist, damit eine Expansion des Wärmespeichermediums bei einem Phasenübergang von fest zu flüssig möglich ist. In diesem Fall ist die elektrische Heizeinrichtung soweit vom oberen Rand beabstandet, dass sie auch dann vom Wärmespeichermedium umgeben ist, wenn dieses im festen Zustand ist.

Durch die Anordnung im oberen Bereich erfolgt eine Verflüssigung des Wärmespeichermediums innerhalb des Gehäuses von oben nach unten. Dadurch können problematische Materialspannungen und -belastungen vermieden werden.

Es kann vorgesehen sein, dass die elektrische Heizeinrichtung direkt in das Wärmespeichermedium eingetaucht ist. Dadurch kann ein guter Wärmeübertrag erreicht werden.

Durch hohe Temperaturen ist die Lebensdauer der elektrischen Heizeinrichtung verhältnismäßig kurz. Um sie schnell austauschen zu können, können eine oder mehrere Einführöffnungen für die elektrische Heizeinrichtung am Gehäuse vorhanden sein. Elektrische Leitungen der elektrischen Heizeinrichtung, durch welche diese mit elektrischer Energie versorgt wird, können ebenso durch die Einführöffnungen verlaufen.

Das Gehäuse kann auch eine oder mehrere Aufnahmeröhren für die elektrische Heizeinrichtung aufweisen. Die Aufnahmeröhre(n) ist/sind so angeordnet, dass sie in das Gehäuse hineinragen und dort vom Wärmespeichermedium umschlossen sind. Von einer Umgebung des Gehäuses sind die Aufnahmeröhren zugänglich, damit die elektrische Heizeinrichtung in die Aufnahmeröhren eingeführt werden kann. So können die Aufnahmeröhren jeweils an eine Einführöffnung angrenzen und so von außen zugänglich sein. Durch die Aufnahmeröhren wird ein Schutz zwischen dem Wärmespeichermedium und der elektrischen Heizeinrichtung erreicht. Zudem wird ein Auswechseln der elektrischen Heizeinrichtung vereinfacht, da diese nicht in direktem Kontakt zum Wärmespeichermedium steht. Um gleichwohl einen guten Wärmeübertrag zu erreichen, kann die elektrische Heizeinrichtung die Aufnahmeröhren direkt berühren. Es kann auch vorgesehen sein, eine Flüssigkeit / ein Fluid zum Wärmeübertrag in die Aufnahmeröhren einzuleiten.

Für eine möglichst gleichmäßige Erwärmung und für eine möglichst große Heizleistung umfasst die elektrische Heizeinrichtung vorzugsweise mehrere Heizelemente. Diese können unabhängig voneinander bewegbar sein. Jedes Heizelement kann durch eine Einführöffnung und/oder in eine Aufnahmeröhre eingeführt sein.

Im Gegensatz zur elektrischen Heizeinrichtung wird der Wärmetauscher außerhalb des Gehäuses angeordnet. Dadurch wird sichergestellt, dass bei einem Leck des Wärmetauschers kein Wärmeträgerfluid in das Gehäuse eintreten kann. Dies könnte ansonsten eine Explosion des Gehäuses oder andere Schäden zur Folge haben. Diese Gefahr wird minimiert, indem das Wärmeträgerfluid von dem Wärmespeichermedium mindestens durch das Gehäuse und durch eine Wand des Wärmetauschers getrennt ist. Während die elektrische Heizeinrichtung im oberen Bereich des Gehäuses angeordnet ist, kann der Wärmetauscher an einer Unterseite des Gehäuses angeordnet sein. Ein Abkühlen des Wärmespeichermediums wird somit im unteren Bereich des Gehäuses erreicht. Ein Erstarren des Wärmespeichermediums beginnt dadurch an der unteren Innenseite des Gehäuses. Dadurch werden Spannungen des Wärmespeichermediums vermieden, die auftreten würden, wenn dieses teilweise fest und teilweise flüssig vorliegt. Der Wärmetauscher kann mehrere Wärmetauscherleitungen aufweisen, die nebeneinander und beabstandet zueinander unterhalb des Gehäuses angeordnet sind. Die Wärmetauscherleitungen decken bevorzugt einen möglichst großen Anteil der Unterseite ab, beispielsweise mindestens 50% oder mindestens 80%. Dadurch ist eine besonders gute Wärmeübertragung möglich. Der Flächenanteil kann durch eine Wärmetauscher-Fläche definiert werden, die durch die äußersten Wärmetauscherleitungen des Wärmetauschers aufgespannt wird, und in ein Verhältnis zur Fläche der Unterseite des Gehäuses gesetzt wird.

Der Wärmetauscher kann eine Einlasssammelleitung und eine Auslasssammelleitung umfassen, wobei sich jede der Wärmetauscherleitungen von der Einlasssammelleitung zu der Auslasssammelleitung erstreckt.

Der Wärmetauscher kann direkt an das Gehäuse an dessen Unterseite angrenzen. Dadurch wird eine gute Wärmeleitung erreicht. Alternativ kann ein Wärmeleitkörper an die Unterseite des Gehäuses angrenzen. Der Wärmetauscher berührt hier den Wärmeleitkörper direkt und kann insbesondere (zumindest teilweise) innerhalb des Wärmeleitkörpers verlaufen. Der Wärmeleitkörper hat zweckmäßigerweise einen höheren Schmelzpunkt als das Wärmespeichermedium und kann beispielsweise aus Kupfer sein.

Eine Verbindung zwischen dem Wärmetauscher und dem Wärmeleitkörper kann hergestellt sein, indem der Wärmeleitkörper in einem geschmolzenen Zustand um den Wärmetauscher geformt ist. Eine Verbindung zwischen dem Wärmeleitkörper und der Unterseite des Gehäuses kann hergestellt sein, indem der Wärmeleitkörper im noch geschmolzenen Zustand an die Unterseite des Gehäuses gepresst ist. Hierdurch werden ein mechanisch stabiler Halt und ein guter Wärmeübertrag erreicht. Wärmetauscherleitungen des Wärmetauschers können unterhalb des Gehäuses ansteigend verlaufen, das heißt in Strömungsrichtung ansteigend. Erfährt das Wärmeträgerfluid einen Phasenübergang von flüssig zu gasförmig, so nimmt die Dichte ab, wodurch es nach oben und dadurch in die Strömungsrichtung gedrängt wird. Trotz dieser Steigung soll ein thermischer Kontakt zum Wärmespeichermedium gleichwohl über die gesamte Fläche des Wärmetauschers gegeben sein. Hierfür kann eine Gehäuseunterseite des Wärmetauschers schräg verlaufen, entsprechend der Steigung. Ist ein Wärmeleitkörper vorgesehen, so kann dieser eine Wärmeübertragung auch dann gewährleisten, wenn eine Entfernung des Wärmetauschers zur Unterseite des Gehäuses über die Unterseite des Gehäuses variabel ist.

Anstelle der oben beschriebenen Anordnung der Wärmetauscherleitungen unterhalb des Gehäuses, werden erfindungsgemäß die Wärmetauscherleitungen des Wärmetauschers seitlich am Gehäuse angeordnet. Eine geeignete Strömung des Wärmeträgerfluids durch den Wärmetauscher kann hierdurch leichter erreicht werden, verglichen mit der Anordnung unterhalb des Gehäuses. Werden zwei Wärmespeicher nebeneinander verwendet, welche jeweils ein Gehäuse und eine elektrische Heizeinrichtung aufweisen, so kann bei einer seitlichen Anordnung vorteilhafterweise ein einziger Wärmetauscher für beide Wärmespeicher verwendet werden. Mit dem Begriff "seitlich" ist hier eine Seite des Gehäuses gemeint, welche nicht die Ober- oder Unterseite ist.

Es kann ein Wärmeisolierungsbehälter vorhanden ist, welcher das Gehäuse, den Wärmeleitkörper und den Wärmetauscher umschließt. Vorteilhafterweise werden hierdurch sämtliche besonders heiße Komponenten umschlossen, wodurch ein Wärmeverlust von diesen weitgehend vermieden werden kann.

An einem oberen Bereich des Gehäuses kann eine Gasexpansionsleitung vorhanden sein, welche zum Bewirken eines Druckausgleichs einen Innenraum des Gehäuses fluidmäßig mit einer Umgebung verbindet. Die Umgebung des Gehäuses kann einen Innenraum eines gegebenenfalls vorhandenen Wärmeisolierbehälters bezeichnen, welcher das Gehäuse umgibt, oder auch einen nicht abgeschlossenen Raum. Es kann bevorzugt sein, dass die Gasexpansionsleitung zu einem geschlossenen Behälter führt, wodurch vermieden wird, dass gasförmig vorliegende Anteile des Wärmespeichermediums verloren gehen. Bei einer einfachen Gestaltung ist die Gasexpansionsleitung ein Loch im Gehäuse. Durch das Loch kann ein Rohr verlaufen, das insbesondere zu einem geschlossenen Behälter führen kann.

Das Gehäuse kann an seiner Oberseite einen Deckel umfassen. Dieser kann geöffnet werden, um Wärmespeichermedium in das Gehäuse einzuführen oder zu entnehmen. Die Gasexpansionsleitung kann durch den Deckel verlaufen oder jedenfalls oberhalb der elektrischen Heizeinrichtung.

Das Gehäuse kann weiterhin auch eine oder mehrere Anschlussöffnungen für einzuführende Temperatursensor(en) umfassen.

Die elektrische Heizeinrichtung kann über elektrische Versorgungsleitungen mit elektrischer Energie versorgt werden. Diese Versorgungsleitungen können sich im Betrieb stark erhitzen. Idealerweise sollte Wärme von den Versorgungsleitungen abgeführt und sinnvoll genutzt werden. Hierzu können Wärmeableitmittel vorgesehen sein, welche eine Wärmeableitung von elektrischen Versorgungsleitungen der elektrischen Heizeinrichtung zu (Zuführ-)Leitungen des Wärmetauschers ermöglichen. Vorteilhafterweise wird somit Wärmeenergie auch von den elektrischen Versorgungsleitungen genutzt, um das Wärmeträgerfluid zu erwärmen. Die Wärmeableitmittel können die elektrischen Versorgungsleitungen außerhalb des Gehäuses umgeben, um von diesen Wärme aufzunehmen. Außerdem können sie mit (Zuführ-)leitungen des Wärmetauschers verbunden sein, um so Wärme auf das Wärmeträgerfluid in den Zuführleitungen abzuleiten. Beispielsweise können die Wärmeableitmittel durch einen Metallblock gebildet sein.

Die Erfindung umfasst auch eine Wärmespeichervorrichtung mit mehreren erfindungsgemäßen Wärmespeichern. Die Wärmespeicher können wie in der vorliegenden Offenbarung beschrieben gebildet sein. Die Wärmespeicher der Wärmespeichervorrichtung können identisch oder voneinander verschieden ausgeführt sein.

Die Wärmespeicher verfügen jeweils über ein Gehäuse und eine elektrische Heizeinrichtung. Es kann entweder ein Wärmetauscher pro Wärmespeicher vorhanden sein, oder jeweils benachbarte Wärmespeicher teilen sich einen Wärmetauscher. Dies ist insbesondere bei einer seitlichen Anordnung des Wärmetauschers einfach realisierbar. Die Gesamtzahl an Wärmetauschern kann hierdurch geringer als die der Wärmespeicher. Sie kann um 1 geringer sein oder im Extremfall bei einer paarweisen Anordnung zahlreicher Wärmespeicher halb so groß wie die Anzahl der Wärmespeicher sein. Alternativ kann die Anzahl an Wärmetauschern auch höher sein als die Anzahl der Wärmespeicher: So kann beispielsweise jeder der Wärmetauscher an zwei gegenüberliegenden Seiten jeweils einen Wärmetauscher aufweisen, wobei sich benachbarte Wärmespeicher einen dazwischen liegenden Wärmetauscher teilen. Die Gesamtzahl an Wärmetauschern kann hierdurch um 1 höher sein als die Anzahl an Wärmespeichern.

Die Wärmetauscher der mehreren Wärmespeicher sind vorzugsweise hydraulisch miteinander verbunden. Das heißt, Leitungen für das Wärmeträgerfluid der verschiedenen Wärmetauscher sind fluidmäßig miteinander verbunden. Es kann vorteilhaft sein, wenn mehrere Wärmespeicher und damit ihre Wärmetauscher in Reihe angeordnet sind. Hierbei wird das Wärmeträgerfluid von einem Wärmetauscher zu einem anderen geleitet. Alternativ oder zusätzlich kann zumindest ein Teil der Wärmespeicher und somit der Wärmetauscher parallel angeordnet sein. Hierbei kann das Wärmeträgerfluid von einer gemeinsamen Eingangsleitung auf mehrere Pfade aufgeteilt werden, welche zu Wärmetauschern verschiedener Wärmespeicher führen und anschließend zu einer gemeinsamen Ausgangseinleitung zusammenführen.

Es kann vorteilhaft sein, wenn ein gemeinsames Isoliergehäuse/Wärmeisolierbehälter vorhanden ist, in dem die mehreren Wärmespeicher aufgenommen sind. Dadurch können Wärmeenergieverluste verringert werden.

Die mehreren Wärmespeicher der Wärmespeichervorrichtung können eine gemeinsame elektrische Versorgungsleitung aufweisen, über welche die jeweiligen elektrischen Heizeinrichtungen mit elektrischer Energie versorgt werden.

Die mehreren Wärmespeicher können in einer Reihe, mehreren Reihen, oder in mehreren übereinanderliegenden Reihen angeordnet sein. Dabei können die Wärmespeicher so ausgerichtet sein, dass ihre Aufnahmeröhren für die elektrischen Heizeinrichtungen von derselben Seite zugänglich sind. Diese Seite kann auch als Vorderseite bezeichnet werden. Für eine leichtere Zugänglichkeit ist die Vorderseite senkrecht zu Seitenwänden der Wärmetauscher, die bei einer Reihenanordnung einander zugewandt sind. Hydraulische Anschlüsse der Wärmetauscher können sich hingegen an den Seitenwänden des Gehäuses befinden, also an den einander zugewandten Wänden von zwei benachbarten Wärmetauschern derselben Reihe. Dadurch wird ein einfaches hydraulisches Verbinden benachbarter Wärmetauscher möglich und unnötig lange Wege können vermieden werden.

Elektronische Steuerungsmittel können vorgesehen und dazu eingerichtet sein, jeder elektrischen Heizeinrichtung individuell eine bestimmte elektrische Leistung zuzuführen. Dadurch kann eine Aufnahme elektrischer Energie aus einem externen Stromnetz in variablem Umfang erfolgen. Zudem können die verschiedenen elektrischen Heizeinrichtungen mit unterschiedlichen Energieleistungen versorgt werden. Dadurch kann bei geringer Energieaufnahme aus einem externen Stromnetz eine Zieltemperatur des Wärmespeichermediums zumindest bei einigen der Wärmespeicher erreicht werden.

Elektronische Steuerungsmittel können auch vorgesehen und dazu eingerichtet sein, ein Durchleiten von Wärmeträgerfluid durch die verschiedenen Wärmetauscher individuell für jeden Wärmetauscher zu steuern. Dies kann insbesondere abhängig von der jeweiligen Temperatur des Wärmespeichermediums der verschiedenen Wärmespeicher erfolgen.

Gegenstand der Erfindung ist außerdem ein System mit mindestens einem erfindungsgemäßen Wärmespeicher oder einer erfindungsgemäßen Wärmespeichervorrichtung. Das System umfasst zudem eine Anlage, welche zum Aufnehmen von Wärmeenergie von dem Wärmeträgerfluid angeordnet ist. Die Anlage umfasst eines oder mehrere aus Folgendem: eine Dampfturbine zum Erzeugen von Bewegungsenergie aus der aufgenommenen Wärmeenergie, eine Stromerzeugungsvorrichtung zum Erzeugen von elektrischer Energie aus der aufgenommenen Wärmeenergie, eine Vorrichtung für Vergasungsvorgänge unter Wärmezufuhr (beispielsweise die Umwandlung von fester Kohle in ein kohlehaltiges Gas), eine Heizanlage zur Gebäudeheizung oder ein oder mehrere Heizkraftwerke. Bei diesen Anlagen wird genutzt, dass der erfindungsgemäße Wärmespeicher ein Wärmeträgerfluid mit verhältnismäßig hoher Temperatur ausgeben kann. Diese hohen Temperaturen werden beispielsweise bei Dampfturbinen, bei den meisten üblichen Verfahren zum Erzeugen elektrischen Stroms oder bei Vergasungsvorgängen benötigt. Als weiterer Vorteil können diese Anlagen relativ große Energiemengen nutzen, so dass die große Speicherkapazität des erfindungsgemäßen Wärmespeichers voll genutzt werden kann.

Varianten des erfindungsgemäßen Verfahrens ergeben sich durch bestimmungsgemäße Verwendung der vorliegend beschriebenen Komponenten.

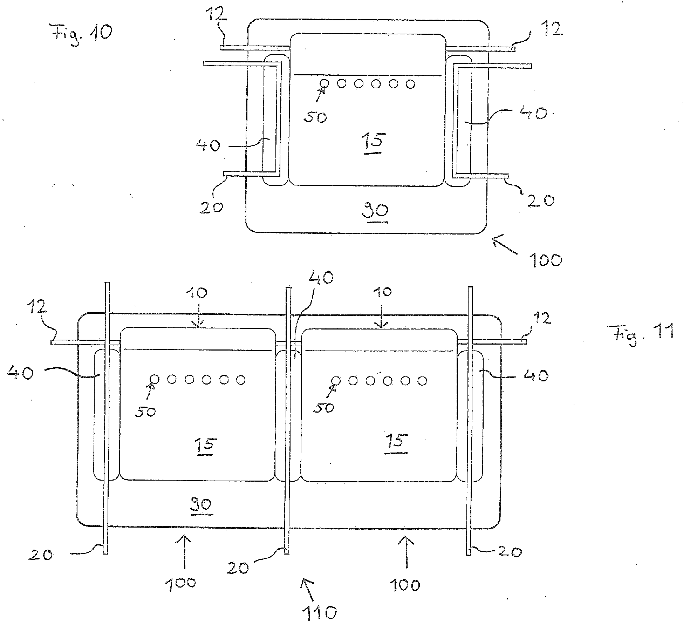

Weitere Vorteile und Merkmale der Erfindung werden nachstehend mit Bezug auf die beigefügten schematischen Figuren beschrieben, wobei Ausführungsbeispiele gemäß der Erfindung auf den Figuren 10 und 11 gezeigt werden.
- Fig. 1: zeigt eine perspektivische Ansicht eines Wärmespeichers;
- Fig. 2: zeigt eine Schnittansicht des Wärmespeichers aus Fig. 1, wobei das Wärmespeichermedium in festem Zustand vorliegt;
- Fig. 3: zeigt eine Schnittansicht des Wärmespeichers aus Fig. 1, wobei das Wärmespeichermedium in flüssigem Zustand vorliegt;
- Fig. 4: zeigt eine perspektivische Ansicht des Wärmespeichers aus Fig. 1, wobei dessen Komponenten zu illustrativen Zwecken transparent dargestellt sind;
- Fig. 5: zeigt perspektivisch einen Schnitt durch den Wärmespeicher aus Fig. 1;
- Fig. 6: zeigt eine Seitenansicht des Wärmespeichers aus Fig. 1;
- Fig. 7: zeigt eine Perspektivansicht eines Ausschnitts des Wärmespeichers aus Fig. 1;
- Fig. 8: zeigt ein Ausführungsbeispiel einer beispielhaften Wärmespeichervorrichtung;
- Fig. 9: zeigt eine Schnittansicht einer weiteren beispielhaften Wärmespeichervorrichtung;
- Fig. 10: zeigt eine Schnittansicht des erfindungsgemäßen Wärmespeichers; und
- Fig. 11: zeigt eine Schnittansicht einer beispielhaften erfindungsgemäßen Wärmespeichervorrichtung.

Gleiche und gleich wirkende Komponenten sind in allen Figuren mit denselben Bezugszeichen versehen.

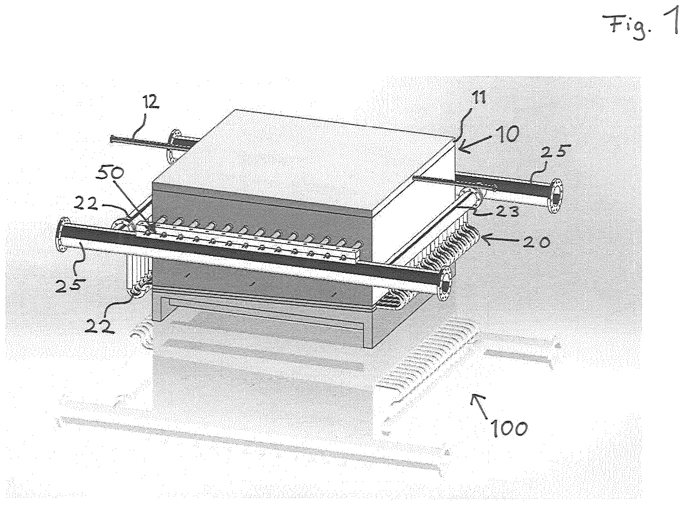

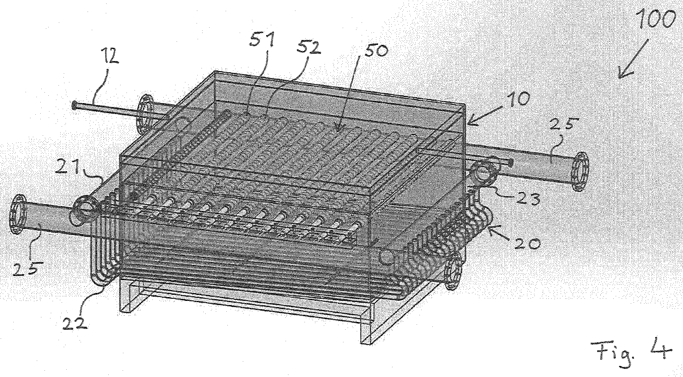

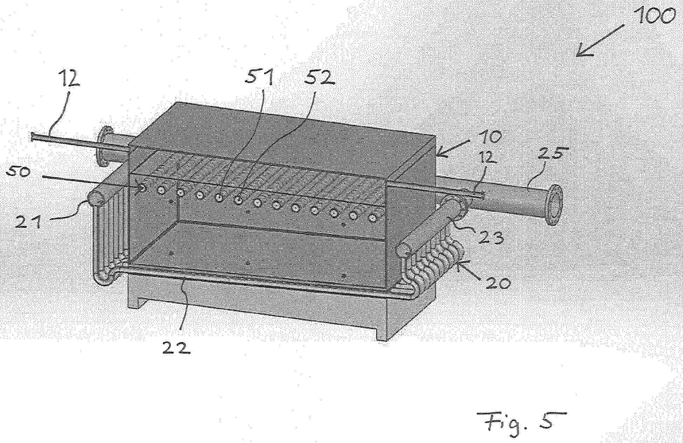

Ein Ausführungsbeispiel eines nicht erfindungsgemäßen Wärmespeichers 100 ist schematisch in den Figuren 1 bis 7 gezeigt. Der Wärmespeicher 100 umfasst als wesentliche Komponenten ein Gehäuse 10, in welchem ein Wärmespeichermedium 15 aufgenommen ist, einen Wärmetauscher 20 und eine elektrische Heizeinrichtung 50. Die elektrische Heizeinrichtung 50 ist dazu gestaltet, elektrische Energie aufzunehmen und diese in Wärmeenergie umzuwandeln. Hierzu kann sie beispielsweise über Widerstandselemente verfügen, durch die im Betrieb ein Strom geleitet wird.

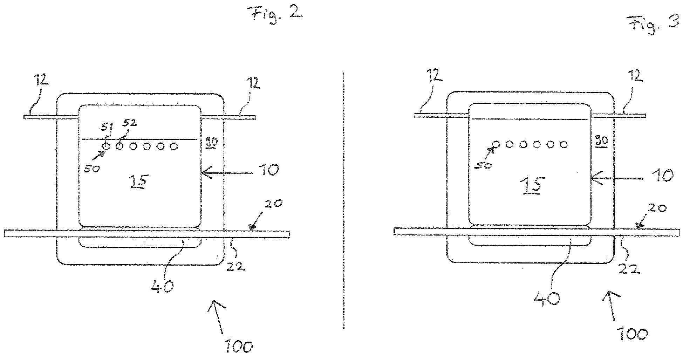

Die so entstandene Wärmeenergie wird an das Wärmespeichermedium 15 (Figuren 2 und 3) abgegeben. Bei dem Wärmespeichermedium 15 handelt es sich um ein Metall, vorzugsweise um Aluminium.

Über den Wärmetauscher 20 kann Wärmeenergie vom Wärmespeichermedium 15 auf ein Wärmeträgerfluid übertragen werden, welches durch den Wärmetauscher 20 strömt oder gepumpt wird.

Durch den Wärmespeicher 100 kann elektrische Energie in Form von Wärmeenergie gespeichert werden. Vorteilhafterweise kann elektrische Energie aufgenommen werden, wenn sie im Überschuss vorhanden ist, beispielsweise wenn der Strompreis unter einen vorgebbaren Grenzwert sinkt. Die aufgenommene Energie kann über lange Zeit durch das Wärmespeichermedium gespeichert werden. Verluste sind dabei sehr gering. Indem ein Metall, insbesondere Aluminium, als Wärmespeichermedium genutzt wird, kann das Wärmeträgerfluid auf verhältnismäßig hohe Temperaturen erhitzt werden, beispielsweise auf über 300°C oder 500°C.

Dadurch kann es für zahlreiche Anwendungen genutzt werden, insbesondere auch zur Erzeugung elektrischer Energie. So kann ein Puffer für Schwankungen in der verfügbaren Menge elektrischer Energie bereitgestellt werden. Insbesondere kann über den Wärmespeicher und eine angeschlossene Anlage zur Erzeugung elektrischer Energie aus Wärmeenergie des Wärmespeichers netto elektrische Energie aufgenommen werden, wenn der Strompreis unter einem vorgebbaren Grenzwert liegt. Steigt hingegen der Strompreis über einen vorgebbaren Schwellwert, so kann netto elektrische Energie ausgegeben werden.

Die elektrische Heizeinrichtung 50 kann über mehrere Heizelemente 51, 52 verfügen. Diese ragen in das Gehäuse 10 hinein, so dass sie vom Wärmespeichermedium 15 umgeben sind (siehe beispielsweise Figuren 2 und 3).

Vorzugsweise ist die Heizeinrichtung 50 dazu gestaltet, das Wärmespeichermedium 15 über dessen Schmelzpunkt zu erhitzen. Durch diesen Phasenübergang kann zusätzliche Energie gespeichert werden.

Das Gehäuse 10 ist nicht vollständig mit dem Wärmespeichermedium 15 gefüllt. Dadurch wird berücksichtigt, dass sich das Wärmespeichermedium 15 beim Übergang vom festen zum flüssigen Zustand ausdehnt.

Die Heizeinrichtung 50 ist in einer Höhe angeordnet, bei der sie gerade noch vom Wärmespeichermedium 15 umgeben ist, wenn sich dieses im festen Zustand befindet. Eine Füllhöhe des Gehäuses 15 bei festem Wärmespeichermedium ist in Figur 2 gezeigt, während Figur 3 den Fall bei flüssigem Wärmespeichermedium zeigt.

Indem die Heizeinrichtung 50 möglichst weit oben im Gehäuse 10 angeordnet ist, beginnt ein Phasenübergang von fest zu flüssig im oberen Bereich. Dadurch werden Materialspannungen des Wärmespeichermediums 15 vermieden.

Die Heizelemente 51, 52 durchlaufen das Gehäuse vorzugsweise vollständig oder erstrecken sich zumindest über 80% einer Gehäusebreite. Dies bewirkt eine gleichmäßige Erwärmung. Zu diesem Zweck sind vorzugsweise auch mehrere Heizelemente 51, 52, beispielsweise mindestens zehn Heizelemente, vorhanden, welche über eine Länge des Gehäuses 10 verteilt sind.

Jedes der Heizelemente 51, 52 ist durch eine jeweilige Öffnung im Gehäuse 10 in dieses eingeführt. Dabei können die Heizelemente 51, 52 das Wärmespeichermedium 15 direkt kontaktieren. Sie können aber auch in Aufnahmeröhren aufgenommen sein, welche sich innerhalb des Gehäuses 10 erstrecken, insbesondere ab einer Öffnung im Gehäuse 10. Die Aufnahmeröhren können innerhalb des Gehäuses 10 eine geschlossene Stirnseite haben oder können sich alternativ bis zu einer gegenüberliegenden Öffnung im Gehäuse 10 erstrecken. Durch die Aufnahmeröhren kann ein direkter Kontakt der Heizelemente 51, 52 zum Wärmespeichermedium 15 vermieden werden. Dies kann vorteilhaft sein, da die Heizelemente 51, 52 Verbrauchsteile sind, die regelmäßig auszutauschen sind.

Ein oberer Anteil im Gehäuse 10 kann mit Gas gefüllt sein. Abhängig vom Verhältnis von festem Wärmespeichermedium 15 zu flüssigem Wärmespeichermedium variiert das Volumen für Gas. Damit Druckunterschiede reduziert werden, die aus einer solchen Volumenänderung und/oder auch aus einer Temperaturänderung des Gases resultieren, ist vorzugsweise mindestens eine Gasexpansionsleitung 12 vorgesehen, siehe beispielsweise Figuren 1 bis 3. Der dargestellte Wärmespeicher 100 umfasst zwei Gasexpansionsleitungen 12, welche einen Innenraum des Wärmespeichers 100 in einem oberen Bereich des Wärmespeichers 100 mit dessen Umgebung verbinden. Gas kann somit aus dem Gehäuse 10 entweichen, wenn das Wärmespeichermedium erhitzt wird.

Die Gasexpansionsleitungen 12 können durch einen Deckel 11 des Gehäuses 10 verlaufen, wie in Fig. 1 gekennzeichnet. Das Gehäuse 10 kann einen Grundkörper und einen Deckel 11 umfassen, welcher den Grundkörper nach oben abschließt.

Der Wärmetauscher 20 umfasst mehrere Wärmetauscherleitungen 22. Diese verlaufen nicht durch das Gehäuse 10, sondern außerhalb am Gehäuse 10. So wird sichergestellt, dass bei einem Auslaufen von Wärmeträgerfluid aus den Wärmetauscherleitungen 22 keine größeren Schäden entstehen.

Die Wärmetauscherleitungen sind erfindungsgemäß seitlich am Gehäuse 10 angeordnet (nicht dargestellt).

Für einen guten Wärmeleitkontakt können die Wärmetauscherleitungen 22 die Unterseite des Gehäuses 10 direkt kontaktieren (nicht gezeigt). Alternativ kann ein Wärmeleitkörper 40 vorhanden sein, welcher die Unterseite des Gehäuses 10 direkt kontaktiert und durch welchen die Wärmetauscherleitungen 22 verlaufen. Durch den Wärmeleitkörper 40 kann von allen Seiten auf die Wärmetauscherleitungen 22 Wärmeenergie übertragen werden. Der Wärmeleitkörper 40 kann sich über die gesamte Unterseite des Gehäuses 10 erstrecken. Er kann eine Höhe haben, die etwa dem zweibis vierfachen Durchmesser der Wärmetauscherleitungen 22 entspricht. Der Wärmeleitkörper 40 kann aus Metall bestehen oder Metall umfassen, welches einen höheren Schmelzpunkt als das Wärmespeichermedium hat.

Ein leichtes Herstellungsverfahren bei gutem thermischem Kontakt und hoher mechanischer Stabilität wird ermöglicht, wenn der Schmelzpunkt des Wärmeleitkörpers 40 unter dem des Gehäuses 10 liegt. Insbesondere in diesem Fall kann der Wärmeleitkörper 40 erhitzt und (zumindest teilweise) geschmolzen und sodann gegen die Unterseite des Gehäuses 10 gepresst werden. Beim Verfestigen entsteht eine stabile Verbindung zur Gehäuseunterseite. In ähnlicher Weise kann eine Verbindung zu den Wärmetauscherleitungen 22 hergestellt werden.

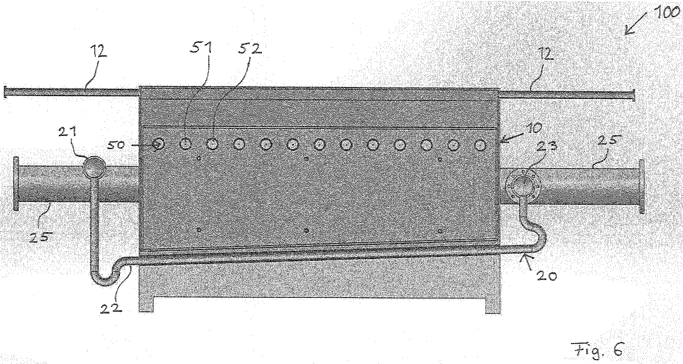

Die Wärmetauscherleitungen 22 verlaufen vorzugsweise nicht horizontal, sondern in Strömungsrichtung des Wärmeträgerfluids aufwärts (siehe Fig. 6). Hierdurch werden vorteilhafte Strömungseigenschaften bewirkt. Die Gehäuseunterseite kann eine entsprechende Neigung haben.

Die mehreren Wärmetauscherleitungen 22 sind mit einer Einlasssammelleitung 21 verbunden, von welcher Wärmeträgerfluid in die Wärmetauscherleitungen 22 einströmt. An ihrem gegenüberliegenden Ende sind die Wärmetauscherleitungen 22 mit einer gemeinsamen Auslasssammelleitung 23 verbunden. Die Einlasssammelleitung 21 und die Auslasssammelleitung 23 können höher als die Wärmetauscherleitungen 22 liegen.

Die Einlasssammelleitung 21 und die Auslasssammelleitung 23 können wiederum mit mindestens einer Zuführleitung 25 für Wärmeträgerfluid verbunden sein. Bei der dargestellten Ausführung sind zwei Zuführleitungen 25 vorhanden, welche parallel zu einer Vorderseite und einer Rückseite des Gehäuses 10 verlaufen (siehe beispielsweise Fig. 1). Die Einlasssammelleitung 21 verläuft quer, vorzugsweise senkrecht, zu den beiden Zuführleitungen 25 und verbindet diese. Ebenso verläuft die Auslasssammelleitung 23 quer, vorzugsweise senkrecht, zu den beiden Zuführleitungen 25. So können die Einlass- und die Auslasssammelleitung 21, 23 parallel zu zwei Seitenwänden des Gehäuses 10 verlaufen, welche senkrecht zur Vorder- und Rückseite des Gehäuses 10 stehen.

Wärmeträgerfluid strömt somit von den Zuführleitungen 25 in die Einlasssammelleitung 21, von dort in die Wärmetauscherleitungen 22, aus diesen in die Auslasssammelleitung 23 und von dort schließlich zurück in die Einlasssammelleitungen 25.

Die Einlasssammelleitungen 25 können einen größeren Querschnitt als die Einlasssammelleitung 21 und die Auslasssammelleitung 23 aufweisen. Dies ist vorteilhaft, wenn nur ein Anteil des Wärmeträgerfluids von den Einlasssammelleitungen 25 in die Einlasssammelleitung 21 geleitet werden soll. Der übrige Anteil kann zu weiteren Wärmespeichern 100 geleitet werden, was später detaillierter beschrieben wird.

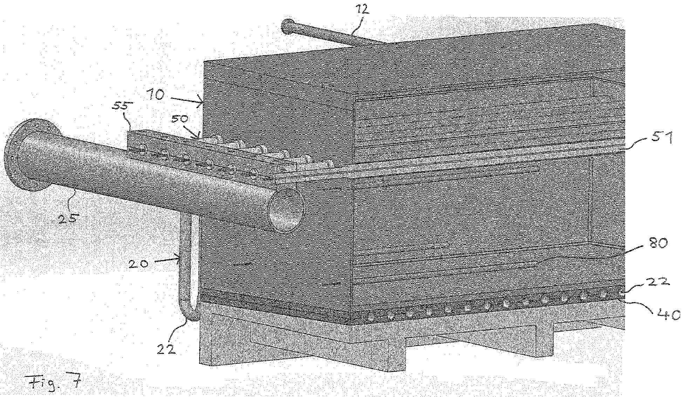

Die elektrische Heizeinrichtung 50 kann über elektrische Versorgungsleitungen verfügen, welche außerhalb des Gehäuses 10 verlaufen und eine Stromzufuhr für jedes der Heizelemente 51, 52 bewirken. Diese Versorgungsleitungen erhitzen sich im Betrieb. Wie in Fig. 7 dargestellt, können Wärmeableitmittel 55 vorgesehen sein, die die Versorgungsleitungen der Heizeinrichtung 50 mit der Zuführleitung 25 mechanisch verbinden. Dadurch wird eine Wärmeableitung auf das Wärmeträgerfluid in der Zuführleitung 25 erreicht. Die Wärmeableitmittel 55 können aus einem Metall bestehen, welches die elektrischen Versorgungsleitungen, insbesondere sämtliche Versorgungsleitungen, der Heizeinrichtung umschließt und die Zuführleitung 25 an zumindest einer Seite kontaktiert. Alternativ können die Wärmeableitmittel 55 auch irgendeine andere Fluidleitung kontaktieren, durch die das Wärmeträgerfluid strömt.

In Fig. 7 sind außerdem mehrere Temperatursensoren 80 gezeigt, welche in das Gehäuse 10 hineinragen. Indem die Temperatursensoren 80 in verschiedenen Höhen angeordnet sind, kann die Temperatur des Wärmespeichermediums 15 in verschiedenen Höhen ermittelt werden. Die Temperatursensoren 80 können in longitudinale Einschubröhren, welche mit dem Gehäuse verbunden sind, eingeschoben sein. Alternativ können die Temperatursensoren 80 das Wärmespeichermedium direkt kontaktieren. Damit die Temperatur an einer bestimmten Höhe erfasst wird, verlaufen die longitudinalen Einschubröhren oder die longitudinalen Temperatursensoren 80 vorzugsweise horizontal, wie in Fig. 7 gezeigt. Durch die Temperaturmessungen an verschiedenen Höhen können elektronische Steuer- und Auswertemittel ableiten, zu welchen Anteilen das Wärmespeichermedium 15 fest oder flüssig vorliegt. Abhängig von den Temperaturmesswerten kann die Menge der elektrischen Energie, die durch die elektrische Heizeinrichtung 50 aufgenommen wird, gesteuert werden.

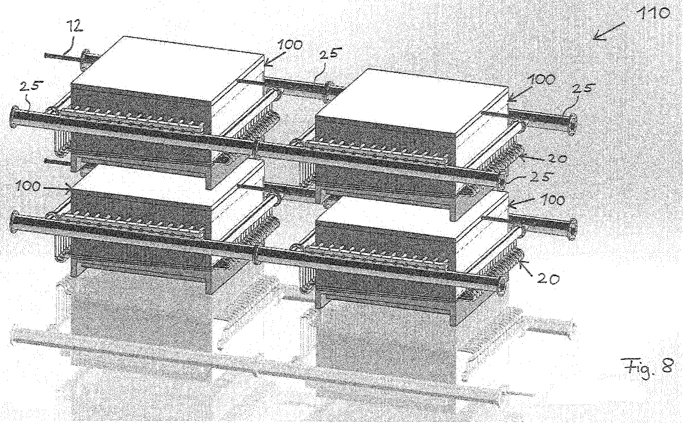

Fig. 8 zeigt eine nicht erfindungsgemäße Wärmespeichervorrichtung 110, welche mehrere Wärmespeicher 100 umfasst. Von diesen sind vier Wärmespeicher 100 dargestellt. Die Wärmespeicher 100 sind in Reihen angeordnet, wobei mehrere Reihen übereinander angeordnet sein können.

Wärmetauscher 20 verschiedener Wärmespeicher 100 derselben Reihe können fluidmäßig, das heißt hydraulisch, miteinander verbunden sein. Gezeigt ist ein Ausführungsbeispiel, bei dem die Zuführleitungen 25 von Wärmetauschern 20 verschiedener Wärmespeicher 100 miteinander verbunden sind. Die Wärmespeicher 100 sind so angeordnet, dass miteinander verbundene Zuführleitungen 25 verschiedener Wärmespeicher 100 einen linearen Verlauf haben. Dies ist hinsichtlich Strömungseigenschaften vorteilhaft. Steuerungsmittel können abhängig von der Temperatur des jeweiligen Wärmespeichers 100 einstellen, ob Wärmeträgerfluid durch dessen Wärmetauscherleitungen 22 gepumpt werden soll.

Die elektrischen Heizeinrichtungen 50 der verschiedenen Wärmespeicher 100 sind an Stirnseiten der jeweiligen Wärmespeicher 100 angeordnet. Die Stirnseiten zeigen von der Richtung einer Reihe, in welcher die Wärmespeicher 100 angeordnet sind, weg. Das heißt, eine Flächennormale der Stirnseiten steht senkrecht zur Richtung einer Reihe. Dadurch sind die Heizeinrichtungen 50 leicht zugänglich. Ein solcher Zugang ist regelmäßig erforderlich, um die Heizeinrichtungen 50 auszutauschen. Vorzugsweise wird durch Steuerungsmittel für jede der Heizeinrichtungen 50 individuell eingestellt, welche Menge elektrischer Energie ihr zugeführt werden soll. So können beispielsweise die Heizeinrichtungen 50 mancher Wärmespeicher 100 erst dann aktiviert werden, wenn in anderen Wärmespeichern 100 eine gewünschte Temperatur bereits erreicht ist.

Die Gasexpansionsleitungen 12 verschiedener Wärmespeicher 100 können miteinander verbunden sein. Dadurch kann die Wärmeenergie von Gas, das aus einem Wärmespeicher 100 abzugeben ist, sinnvoll genutzt werden, indem es Wärmeenergie in einen benachbarten Wärmespeicher 100 einbringt. Alternativ können die Gasexpansionsleitungen 12 verschiedener Wärmespeicher 100 aber auch nicht miteinander verbunden sein, wodurch ein Druckausgleich leichter möglich ist.

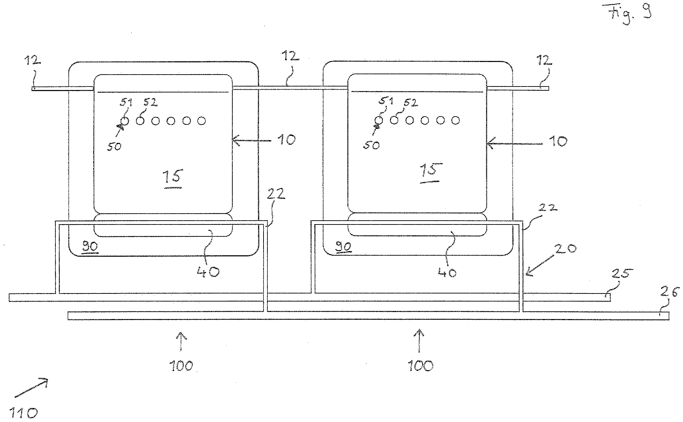

Eine mögliche hydraulische Verbindung der Wärmespeicher 20 mehrerer Wärmespeicher 100 ist in Fig. 9 gezeigt. Über eine Zuführleitung 25 wird ein Wärmeträgerfluid zunächst in die Wärmespeicherleitungen 22 mehrerer Wärmespeicher 20 geleitet. Von dort strömt das Wärmeträgerfluid erhitzt weiter in eine Leitung 26. Diese kann das Wärmeträgerfluid zu einer anderen Anlage befördern, wo dessen Wärmeenergie beispielsweise für Vergasungsprozesse genutzt werden kann.

Ein Ausführungsbeispiel eines erfindungsgemäßen Wärmespeichers 100 ist in Fig. 10 als Schnittansicht gezeigt. Dieses unterscheidet sich von dem Wärmespeicher aus beispielsweise Fig. 2 durch die Gestaltung des Wärmetauschers 20. Gemäß Fig. 10 ist der Wärmetauscher 20 nicht unterhalb des Gehäuses 10 angeordnet. Vielmehr wird mindestens ein Wärmetauscher 20 (im dargestellten Beispiel zwei Wärmetauscher 20) an seitlichen Flächen des Gehäuses angeordnet. An diesen seitlichen Flächen befindet sich jeweils ein Wärmeleitkörper 40 zum Übertragen von Wärme vom Gehäuse 10 auf die Wärmetauscher 20. Wärmetauscherleitungen der Wärmetauscher 20 verlaufen an diesen Seiten nicht horizontal, sondern schräg oder vertikal. Dadurch kann eine geeignete Aufwärtsströmung des Wärmeträgerfluids in den Wärmetauscherleitungen einfach erreicht werden.

Mehrere des in Fig. 10 dargestellten Wärmespeichers 100 können auch zu einer Wärmespeichervorrichtung 110 verbunden werden. Dies ist in Fig. 11 schematisch gezeigt. Durch die seitliche Anordnung der Wärmetauscher 20 und der optional vorhanden Wärmeleitkörper 40 können sich zwei benachbarte Wärmespeicher 100 einen dazwischen liegenden Wärmetauscher 20 und den zugehörigen Wärmeleitkörper 40 teilen.

Bei einer seitlichen Anordnung können der Wärmetauscher 20 und der optional vorhandene Wärmeleitkörper 40 unterhalb eines oberen Endes des Gehäuses 10 enden (siehe Figuren). Der Wärmetauscher 20 und der Wärmeleitkörper 40 können mit ihrem Schwerpunkt unterhalb einer Mitte des Wärmespeichers 10 angeordnet sein. Dadurch kann sichergestellt werden, dass ein Erstarren des Wärmespeichermediums im unteren Bereich des Gehäuses 10 beginnt.

In Fig. 11 liegt das Wärmespeichermedium 15 flüssig vor, während es im Fall von Fig. 10 fest vorliegt. Im flüssigen Zustand ist der Füllstand im Gehäuse 10 höher und liegt näher an der Gasexpansionsleitung 12 als an der elektrischen Heizeinrichtung 50, während dies im festen Zustand umgekehrt ist.

Ein ungewollter Wärmeverlust von einem Wärmespeicher 100 soll möglichst vermieden werden. Hierzu kann ein Wärmeisolierungsbehälter 90 vorhanden sein (Figuren 2 und 9 bis 11). Der Wärmeisolierungsbehälter 90 umschließt vorzugsweise mindestens das Gehäuse 10 mit der darin angeordneten Heizeinrichtung 50 sowie den Wärmetauscher 20. Sind mehrere Wärmespeicher 100 nebeneinander vorhanden (Figuren 9 und 11), so kann ein einziger Wärmeisolierungsbehälter 90 die Komponenten 10, 20, 50 mehrerer Wärmespeicher 100 umschließen.

Die Anordnung mehrerer Wärmespeicher 100 ermöglicht einerseits eine Steigerung der maximal speicherbaren Energie. Andererseits kann im Gegensatz zu einem einzigen besonders großen Wärmespeicher 100 erreicht werden, dass auch bei Schwankungen der gespeicherten Wärmeenergie zumindest in manchen der Wärmespeicher 100 eine gewünschte Temperatur erreicht wird, durch welche das Wärmeträgerfluid erhitzt werden soll. Weiterhin kann durch eine Wärmespeichervorrichtung 110 mit mehreren Wärmespeichern 100 ein nachträgliches Erweitern um einen oder mehrere Wärmespeicher 100 leicht vorgenommen werden.

Der erfindungsgemäße Wärmespeicher 100 bietet als wesentliche Vorteile, dass große Mengen elektrischer Energie in Form von Wärmeenergie gespeichert werden können, mit welcher aufgrund des Metalls, insbesondere Aluminiums, das als Wärmespeichermedium verwendet wird, ein Wärmeträgerfluid auf vergleichsweise sehr hohe Temperaturen erhitzt werden kann.

## Patentansprüche

1. Wärmespeicher mit
einem Gehäuse (10) zum Aufnehmen eines Wärmespeichermediums (15), einem im Gehäuse (10) aufgenommenen Wärmespeichermedium (15) einem Wärmetauscher (20), in welchem ein Wärmeträgerfluid transportierbar ist und welcher so angeordnet ist, dass Wärme vom Wärmespeichermedium (15) auf das Wärmeträgerfluid übertragbar ist,
einer elektrischen Heizeinrichtung (50), welche zum Umwandeln von elektrischer Energie in Wärmeenergie eingerichtet ist,
wobei die elektrische Heizeinrichtung (50) so angeordnet ist, dass sie im Betrieb das Wärmespeichermedium (15) erhitzt, und
wobei das von der elektrischen Heizeinrichtung (50) erhitzte Wärmespeichermedium (15) ein Metall ist,
**dadurch gekennzeichnet,**
**dass** der Wärmetauscher (20) außerhalb des Gehäuses (10) angeordnet ist, dass Wärmetauscherleitungen des Wärmetauschers (20) seitlich am Gehäuse (10) angeordnet sind und
**dass** die elektrische Heizeinrichtung (50) in einem oberen Bereich des Gehäuses (10) angeordnet ist.

2. Wärmespeicher nach Anspruch 1,
**dadurch gekennzeichnet,**
**dass** das Wärmespeichermedium (15) Aluminium ist.

3. Wärmespeicher nach Anspruch 1 oder 2,
**dadurch gekennzeichnet,**
**dass** die elektrische Heizeinrichtung (50) dazu eingerichtet ist, das Wärmespeichermedium (15) über dessen Schmelzpunkt zu erhitzen.

4. Wärmespeicher nach einem der Ansprüche 1 bis 3,
**dadurch gekennzeichnet,**
**dass** das Gehäuse (10) Aufnahmeröhren für die elektrische Heizeinrichtung (50) aufweist, wobei die Aufnahmeröhren so angeordnet sind, dass sie in das Gehäuse (10) hineinragen und dort vom Wärmespeichermedium (15) umschlossen sind und dass die Aufnahmeröhren von einer Umgebung des Gehäuses (10) zugänglich sind zum Einführen der elektrischen Heizeinrichtung (50) in die Aufnahmeröhren.

5. Wärmespeicher nach einem der Ansprüche 1 bis 4,
**dadurch gekennzeichnet,**
**dass** an einem oberen Bereich des Gehäuses (10) eine Gasexpansionsleitung (12) vorhanden ist, welche zum Bewirken eines Druckausgleichs einen Innenraum des Gehäuses (10) fluidmäßig mit einer Umgebung verbindet.

6. Wärmespeicher nach einem der Ansprüche 1 bis 5,
**dadurch gekennzeichnet,**
**dass** Wärmeableitmittel (55) vorgesehen sind, welche eine Wärmeableitung von elektrischen Versorgungsleitungen der elektrischen Heizeinrichtung (50) zu Zuführleitungen (25) des Wärmetauschers (20) ermöglichen.

7. Wärmespeichervorrichtung mit
mehreren Wärmespeichern, die jeweils gemäß einem der Ansprüche 1 bis 6 gebildet sind,
wobei die Wärmetauscher (20) der mehreren Wärmespeicher hydraulisch miteinander verbunden sind.

8. Wärmespeichervorrichtung nach Anspruch 7,
**dadurch gekennzeichnet,**
**dass** die mehreren Wärmespeicher in einer Reihe oder in mehreren übereinanderliegenden Reihen angeordnet sind und
**dass** die Wärmespeicher so ausgerichtet sind, dass ihre Aufnahmeröhren für die elektrischen Heizeinrichtungen (50) von derselben Seite zugänglich sind.

9. System
mit mindestens einem Wärmespeicher nach einem der Ansprüche 1 bis 6 oder einer Wärmespeichervorrichtung nach Anspruch 7 oder 8 und
mit einer Anlage, welche zum Aufnehmen von Wärmeenergie von dem Wärmeträgerfluid angeordnet ist,
wobei die Anlage eines oder mehrere aus Folgendem umfasst: eine Dampfturbine zum Erzeugen von Bewegungsenergie aus der aufgenommenen Wärmeenergie, eine Stromerzeugungsvorrichtung zum Erzeugen von elektrischer Energie aus der aufgenommenen Wärmeenergie, eine Vorrichtung für Vergasungsvorgänge unter Wärmezufuhr, eine Heizanlage zur Gebäudeheizung oder Heizkraftwerke.

10. Verfahren zum Betreiben eines Wärmespeichers,
bei dem Wärmeenergie von einer Wärmequelle auf ein Wärmespeichermedium (15) übertragen wird, welches in einem Gehäuse (10) des Wärmespeichers aufgenommen ist,
bei dem die von der Wärmequelle erzeugte Wärmeenergie auf ein Metall als Wärmespeichermedium (15) übertragen wird,
**dadurch gekennzeichnet,**
**dass** Wärmeenergie vom Wärmespeicher auf ein Wärmeträgerfluid übertragen wird, welches durch einen außerhalb des Gehäuses (10) angeordneten Wärmetauscher (20) mit Wärmetauscherleitungen, die seitlich am Gehäuse (10) angeordnet sind, transportiert wird,
**dass** als Wärmequelle eine elektrische Heizeinrichtung (50), die in einem oberen Bereich des Gehäuses (10) angeordnet ist, elektrische Energie in Wärmeenergie umwandelt.

## Claims

1. Heat accumulator comprising
a housing (10) to receive a heat storage medium (15),
a heat storage medium (15) received in the housing (10),
a heat exchanger (20), in which a heat carrier fluid can be transported and which is arranged so that heat can be transferred from the heat storage medium (15) to the heat carrier fluid,
an electrical heating means (50) which is configured to convert electrical energy into heat energy,
the electrical heating means (50) being arranged so that it heats the heat storage medium (15) during operation, and
the heat storage medium (15) heated by the electrical heating means (50) is a metal,
**characterised in that**
the heat exchanger (20) is arranged outside of the housing (10),
heat exchanger lines of the heat exchanger (20) are arranged laterally on the housing (10), and
the electrical heating means (50) is arranged in an upper region of the housing (10).

2. Heat accumulator according to claim 1,
**characterised in that**
the heat storage medium (15) is aluminium.

3. Heat accumulator according to claim 1 or 2,
**characterised in that**
the electrical heating means (50) is configured to heat the heat storage medium (15) to above its melting point.

4. Heat accumulator according to one of claims 1 to 3,
**characterised in that**
the housing (10) has receiving pipes for the electrical heating means (50), wherein the receiving pipes are arranged so that they project into the housing (10) and are surrounded there by the heat storage medium (15), and the receiving pipes are accessible from an environment of the housing (10) to introduce the electrical heating means (50) into the receiving pipes.

5. Heat accumulator according to one of claims 1 to 4,
**characterised in that**
a gas expansion line (12) is provided at an upper region of the housing (10) which fluidically connects an inner space of the housing to an environment in order to bring about a pressure compensation.

6. Heat accumulator according to one of claims 1 to 5,
**characterised in that**
heat removal means (55) are provided which facilitate a heat removal from electrical supply lines of the electrical heating means (50) to feed lines (25) of the heat exchanger (20).

7. Heat storage device having
a plurality of heat accumulators which are each formed according to one of claims 1 to 6,
wherein the heat exchangers (20) of the plurality of heat accumulators are hydraulically connected to each other.

8. Heat storage device according to claim 7,
**characterised in that**
the plurality of heat accumulators are arranged in a row or in a plurality of rows lying one above the other, and
the heat accumulators are orientated so that their receiving pipes for the electrical heating means (50) are accessible from the same side.

9. System comprising
at least one heat accumulator according to one of claims 1 to 6 or a heat storage device according to claim 7 or 8 and
an installation which is arranged to receive heat energy from the heat carrier fluid,
wherein the installation comprises one or more of the following: a steam turbine to generate kinetic energy from the heat energy received, a power generation device to generate electrical energy from the heat energy received, a device for gasification processes with the supply of heat, a heating system for heating buildings.

10. Method for operating a heat accumulator,
wherein heat energy is transferred from a heat source to a heat storage medium (15) which is received in a housing (10) of the heat accumulator, wherein the heat energy generated by the heat source is transferred to a metal as a heat storage medium (15),
**characterised in that**
heat energy is transferred from the heat accumulator to a heat carrier fluid which is transported through a heat exchanger (20) which is arranged outside the housing (10), with heat exchanger lines that are arranged laterally at the housing (10),
as the heat source an electrical heating means (50), which is arranged in an upper region of the housing (10), converts electrical energy into heat energy.

## Revendications

1. Accumulateur de chaleur avec
un boîtier (10) pour recueillir un agent accumulateur de chaleur (15),
un agent accumulateur de chaleur (15) recueilli dans le boîtier (10),
un échangeur de chaleur (20) dans lequel un fluide caloporteur est transportable et lequel est agencé de telle sorte que de la chaleur peut être transférée de l'agent accumulateur de chaleur (15) vers le fluide caloporteur,
un dispositif de chauffage électrique (50) agencé pour transformer de l'énergie électrique en énergie thermique,
tandis que le dispositif de chauffage électrique (50) est agencé de telle sorte qu'elle chauffe, en fonctionnement, l'agent accumulateur de chaleur (15), et tandis que l'agent accumulateur de chaleur (15) chauffé par le dispositif de chauffage électrique (50) est un métal,
**caractérisé en ce que**
l'échangeur de chaleur (20) est agencé en dehors du boîtier (19),
des canalisations d'échangeur de chaleur de l'échangeur de chaleur (20) sont agencées sur un côté du boîtier (10) et
le dispositif de chaleur électrique (50) est agencé dans une zone supérieure du boîtier (10).

2. Accumulateur de chaleur selon la revendication 1,
**caractérisé en ce que**
l'agent accumulateur de chaleur (15) est de l'aluminium.

3. Accumulateur de chaleur selon la revendication 1 ou 2,
**caractérisé en ce que**
le dispositif de chaleur électrique (50) est agencé de sorte à chauffer l'agent accumulateur de chaleur (15) au-delà de son point de fusion.

4. Accumulateur de chaleur selon une des revendications 1 à 3,
**caractérisé en ce que**
le boîtier (10) présente des tubes à image intégrale pour le dispositif de chauffage électrique (50), tandis que les tubes à image intégrale sont agencés de telle sorte qu'ils pénètrent dans le boîtier (10) et sont entourés, dans le boîtier (10), par l'agent accumulateur de chaleur et que les tubes à image intégrale sont accessibles dans l'environnement du boîtier (10) afin d'introduire le dispositif de chaleur électrique (50) dans les tubes à image intégrale.

5. Accumulateur de chaleur selon une des revendications 1 à 4,
**caractérisé en ce que**
dans une zone supérieure du boîtier (10) se trouve une conduite d'expansion à l'aide d'un gaz (12), laquelle relie de manière fluidique un espace interne du boîtier (10) avec un environnement, afin de créer une compensation de pression.

6. Accumulateur de chaleur selon une des revendications 1 à 5,
**caractérisé en ce que**
sont prévus des moyens de dérivation de chaleur (55), qui permettent une dérivation de la chaleur à partir de conduites d'approvisionnement électriques du dispositif de chaleur électrique (50) vers des conduites d'alimentation (25) de l'échangeur de chaleur (20).

7. Dispositif accumulateur de chaleur avec
plusieurs accumulateurs de chaleur qui sont chacun constitués conformément aux revendications 1 à 6,
tandis que les échangeurs de chaleur (20) de la pluralité d'accumulateurs de chaleur sont reliés les uns aux autres de manière hydraulique.

8. Dispositif accumulateur de chaleur selon la revendication 7,
**caractérisé en ce que**
la pluralité d'accumulateurs de chaleur sont agencés en une rangée ou en plusieurs rangées positionnées les unes sur les autres et
les accumulateurs de chaleur sont orientés de telle sorte que leurs tubes à image intégrale sont accessibles pour les dispositifs de chaleur électriques (50) à partir du même côté.

9. Système
avec au moins un accumulateur de chaleur selon les revendications 1 à 6 ou un dispositif accumulateur de chaleur selon la revendication 7 ou 8 et
avec une installation qui est agencée pour recueillir de l'énergie thermique à partir du fluide caloporteur,
tandis que l'installation comprend un ou plusieurs des éléments suivants : une turbine vapeur pour produire de l'énergie cinétique à partir de l'énergie thermique recueillie, un dispositif générant de l'électricité pour produire de l'énergie électrique à partir de l'énergie thermique recueillie, un dispositif pour des processus de gazéification moyennant un apport de chaleur, une installation de chauffage pour le chauffage de bâtiment ou des centrales thermiques.

10. Procédé pour le fonctionnement d'un accumulateur de chaleur,
par lequel de l'énergie thermique est transférée d'une source de chaleur vers un agent accumulateur de chaleur (15), lequel est recueilli dans un boîtier (10) de l'accumulateur de chaleur,
par lequel l'énergie thermique produite par la source de chaleur est transférée sur un métal en tant qu'agent accumulateur de chaleur (15),
**caractérisé en ce que**
de l'énergie thermique est transférée de l'accumulateur de chaleur vers un fluide caloporteur, lequel est transporté par le biais d'un échangeur de chaleur (20), agencé à l'extérieur du boîtier (19), avec des conduites d'échangeur de chaleur, qui sont agencées sur un côté du boîtier (10),
un dispositif de chauffage électrique (50), en tant que source de chaleur, qui est agencé dans une zone supérieure du boîtier (10), transforme l'énergie électrique en énergie thermique.
